# EUROPEAN PATENT APPLICATION

(11) **EP 4 421 633 A1**
(43) Date of publication of application: **28.08.2024**
(21) Application number: 23206061.6
(22) Date of filing: 26.10.2023
(51) Int. Cl.: G06F 9/50

(54) **SPECIFYING A PROCESSOR WITH ASSURED AND OPPORTUNISTIC CORES**

(30) Priority: 22.02.2023 US 202318172943
(71) Applicant: INTEL Corporation, Santa Clara, CA 95054 (US)
(72) Inventor: Therien, Guy, Sherwood OR, 97140 (US)
(74) Representative: Samson & Partner Patentanwälte mbB

(57) **Abstract**

In one embodiment, a processor includes: a plurality of cores to execute instructions and a non-volatile storage coupled to the plurality of cores to store identification information regarding the plurality of cores, the identification information to identify, for each of the plurality of cores, the core as an assured core or an opportunistic core. The processor is specified with a first subset of the plurality of cores comprising assured cores and a second subset of the plurality of cores comprising opportunistic cores, and is to execute, within a specified power budget and a specified thermal budget, a specified workload on the first subset of the plurality of cores at a first performance level. Other embodiments are described and claimed.

## Description

### BACKGROUND

Modern processors can be manufactured with a large number of cores. Power consumption becomes an issue, since with all cores operating multi-threaded workloads power consumption can undesirably increase, which if not power managed, can lead to faults, failures and thermal events.

Power dissipation of worst-case real world workloads limits product core count as performance (frequency) is assured by manufacturing to be within a specified power envelope for such workloads. As a result, multi-thread performance is limited by the number of processor cores in the package.

### BRIEF DESCRIPTION OF THE DRAWINGS

FIG. 1 is a block diagram of a computing system in accordance with an embodiment.
FIG. 2 is block diagram of a system on chip in accordance with an embodiment.
FIG. 3 is a flow diagram of a method in accordance with an embodiment.
FIG. 4 is a flow diagram of a method in accordance with another embodiment.
FIG. 5 illustrates an example computing system.
FIG. 6 illustrates a block diagram of an example processor in accordance with an embodiment.
FIG. 7 is a block diagram of a processor core in accordance with an embodiment.

### DETAILED DESCRIPTION

In various embodiments, a processor having multiple cores can be manufactured with multiple different core types. These different core types may provide for a range of performance and power efficiency, as the different core types can have different micro-architectures and capabilities, and operate at different power consumption levels.

In addition, due to manufacturing variations it is possible that as fabricated certain cores can have higher performance capabilities than other similarly configured cores. It is further possible that one or more cores of a processor may not function correctly due to manufacturing defects. During manufacturing testing and characterization activities, the various cores can be analyzed to identify their relative performance capabilities, functional correctness and so forth.

Based at least in part on such information, a processor stock keeping unit (SKU) can be established for the processor in which a first subset of cores can be identified as so-called "base" or "assured" cores. Herein, the terms "base" and "assured" are used interchangeably to refer to cores or other processing circuits that are specified as being available to execute threads of workloads up to and including worst-case workloads. That is, these cores are specified such that a worst-case real world workload (a so-called guaranteed or thermal design power (TDP) workload) can operate at a specified operating frequency (a so-called guaranteed frequency) and the processor, by specification, is guaranteed to operate within its design limits (e.g., a so-called TDP power level or other specified power level and thermal constraint) with all of the assured cores operating.

In addition, the processor includes a second subset of cores that are identified as so-called "turbo" or "opportunistic" cores. Herein, the terms "turbo" and "opportunistic" are used interchangeably to refer to cores or other processing circuits that are specified as being available to execute threads of workloads when there is available headroom (e.g., power and/or thermal headroom). As an example, such headroom may be present for low complexity workloads that have lower computing and power consumption requirements than a worst-case workload. As such, less complex application may be assigned to the opportunistic cores. Note further that the term "turbo core" is not to be confused with a so-called "turbo frequency" in which a core or other processing circuit is permitted to operate at a frequency higher than a guaranteed frequency when available headroom exists.

With such processor configuration, more multi-threaded performance may be realized when workloads operate within lower power envelopes. In addition, product differentiation is realized between different processor SKUs, in that a single processor as designed and manufactured can be binned into multiple SKUs in which different numbers of assured and opportunistic cores are specified. For example, processors manufactured from dies of a single wafer can be specified with different SKUs having different numbers of assured and opportunistic cores. In this way, it may be possible to sell a processor SKU having a greater number of assured cores for a higher value than a processor SKU having a smaller number of assured cores. Note that these different processor SKUs may have the identical circuitry but be binned into different SKUs based on manufacturing testing and characterization.

In various embodiments, the identification of cores as assured or opportunistic can be exposed to an operating system (OS) and/or applications to enable use of this information in scheduling workloads onto the various cores. Note that the opportunistic cores are not guaranteed to always be available. For example, when processor constraints exist (e.g., thermal constraints, power constraints or so forth), hardware circuitry of the processor may first reduce operating frequency of any active opportunistic cores to reduce or eliminate the constraint. Should the constraint continue to exist, the hardware circuitry may then communicate with the OS/applications to indicate that one or more of the opportunistic cores are no longer available for scheduling. When it is determined that opportunistic cores are to be shed, processor hardware may communicate with the OS to shed/stop using these cores. It is also possible to simply reduce frequency of these opportunistic cores via duty cycling to a low level, to control thermals. In this situation, the OS may observe this duty cycling and move work on its own as a result.

With embodiments, product core counts and multi-threaded capabilities may increase, realizing greater performance within a constrained environment. Furthermore, embodiments may enable monetization of dark silicon in forced down bin cases where otherwise present cores may not be allowed to be used.

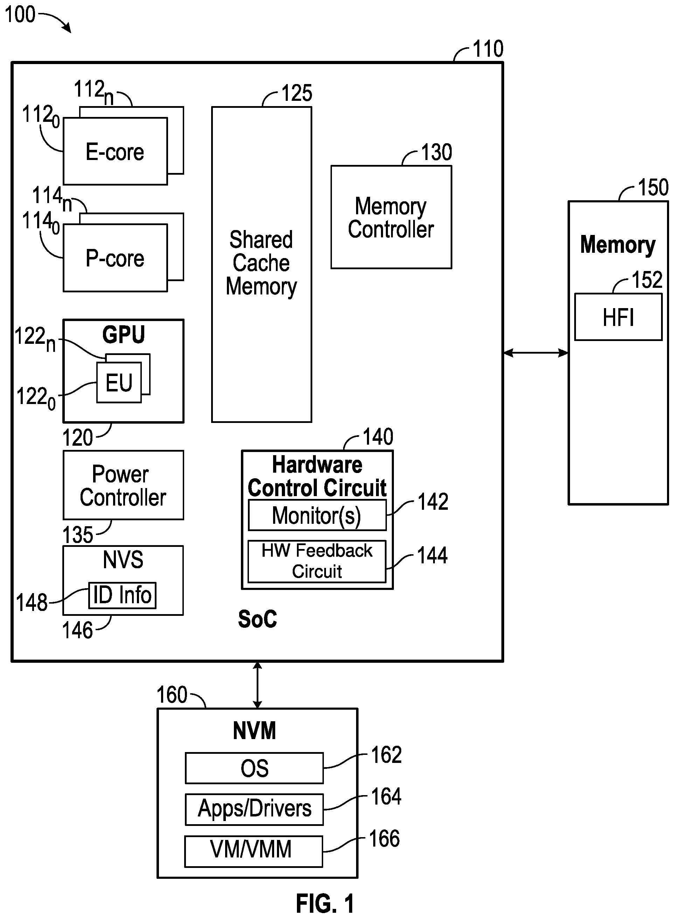

Referring now to FIG. 1, shown is a block diagram of a system in accordance with an embodiment. As shown in FIG. 1, computing system 100 may be any type of computing device, ranging from a relatively small device such as a smartphone to larger devices, including laptop computers, desktop computers, server computers or so forth. In the high level shown in FIG. 1, system 100 includes a processor that is implemented as an SoC 110, although other processor implementations are possible. As shown, processor SoC 110 couples to a memory 150 which is a system memory (e.g., a dynamic random access memory (DRAM)), and a non-volatile memory 160 which in different embodiments can be implemented as a flash memory, disk drive or so forth. Understand that the terms "system on chip" or "SoC" are to be broadly construed to mean an integrated circuit having one or more semiconductor dies implemented in a package, whether a single die, a plurality of dies on a common substrate, or a plurality of dies at least some of which are in stacked relation. Thus as used herein, such SoCs are contemplated to include separate chiplets, dielets, and/or tiles, and the terms "system in package" and "SiP" are interchangeable with system on chip and SoC.

With respect to SoC 110, included are a plurality of cores. In the particular embodiment shown, two different core types are present, namely first cores 112₀-112ₙ (so-called efficiency cores (E-cores)) and second cores 114₀₋ₙ (so-called performance cores (P-cores)). As further shown, SoC 110 includes a graphics processing unit (GPU) 120 including a plurality of execution units (EUs) 122₀₋ₙ. In one or more embodiments, first cores 112 and second cores 114 and/or GPU 120 may be implemented on separate dies. In embodiments, cores 112 and 114 can be categorized into assured or opportunistic cores, e.g., based on reliability testing. Note that the specification of cores as assured or opportunistic is not necessarily based on the different core types. In various embodiments, it is possible to specify cores of each of these types to the assured and opportunistic categories, e.g., randomly, or more likely based on manufacture time testing and characterization of core capabilities. Thus it is possible that the specified assured cores can include one or more of both first cores 112 and second cores 114. Similarly, it is possible that the specified opportunistic cores can include one or more of both first cores 112 and second cores 114.

After specification, core identification information may be persistently stored within SoC 110. To this end, SoC 110 includes a non-volatile storage 146 in which core identification information 148 may be stored. Although embodiments are not limited in this regard, non-volatile storage 146 may be implemented as fuse storage. Core identification information 148 may be stored in a table or list form in which each core is identified as an assured or opportunistic core.

These various computing elements couple to additional components of SoC 110, including a shared cache memory 125, which in an embodiment may be a last level cache (LLC) having a distributed architecture. In addition, a memory controller 130 is present along with a power controller 135, which may be implemented as a hardware control circuit that may be a dedicated microcontroller to execute instructions, e.g., stored on a non-transitory storage medium (e.g., firmware instructions). In other cases, power controller 135 may have different portions that are distributed across one or more of the available cores.

Still with reference to FIG. 1, SoC 110 further includes a hardware control circuit 140 independent of power controller 135. In various embodiments herein, hardware control circuit 140 may be configured to monitor operating conditions, e.g., using one or more monitors 142. Based at least in part on the monitored operating conditions, a hardware feedback circuit 144 of hardware control circuit 140 may maintain hardware feedback information, which may dynamically indicate processor capabilities, e.g., with respect to performance and efficiency. In addition, this hardware feedback information may include core identification information to identify whether cores are assured or opportunistic. In one embodiment, hardware feedback circuit 144 may update information present in an interface structure stored in memory 150. Specifically, a hardware feedback interface (HFI) 152 may be stored in memory 150 that includes information regarding, *inter alia,* efficiency and performance levels of various cores, and the identification of core specification (e.g., assured or optimistic).

When this information is updated, hardware control circuit 140 may communicate, e.g., via an interrupt, to an OS 162. As illustrated, NVM 160 may store OS 162, various applications, drivers and other software (generally identified at 164), and one or more virtualization environments 166 (generally identified as VMM/VM 166). In one instantiation, communication of hardware feedback information to OS 162 may be via Intel^{®} Thread Director technology, implemented at least in part in hardware feedback circuit 144.

Understand while shown at this high level in the embodiment of FIG. 1, many variations and alternatives are possible, and other implementations of SoC 100 can equally incorporate embodiments. For example depending on market segment, an SoC can include, instead of a hybrid product having heterogeneous core types, only cores of a single type. Further, more or different accelerator types may be present. For example, in addition to or instead of GPUs, an SoC may include a direct streaming accelerator (DSA), field programmable gate array (FPGA) or other accelerator.

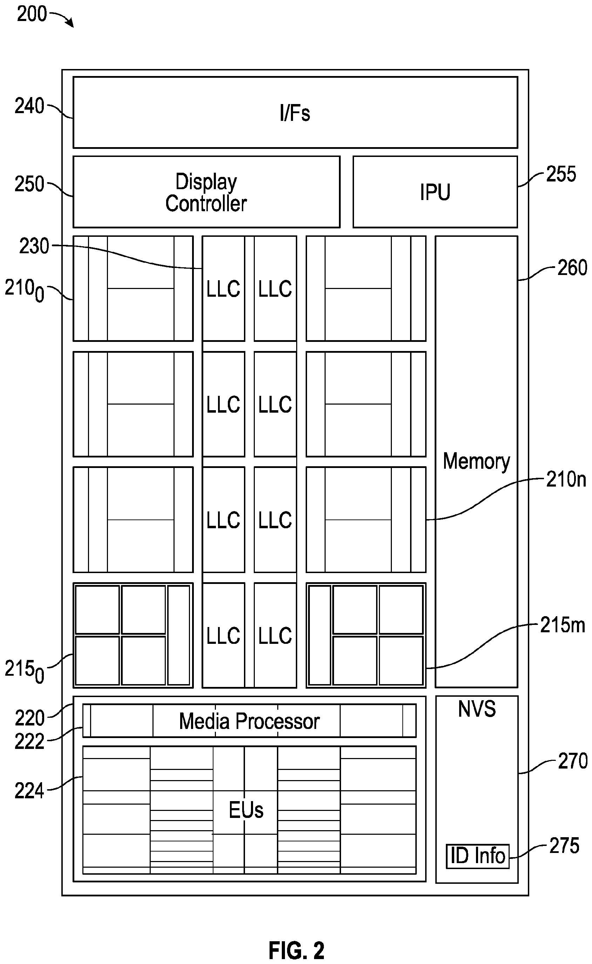

Referring now to FIG. 2, shown is a block diagram of an SoC in accordance with another embodiment. More specifically as shown in FIG. 2, SoC 200 is a multicore processor, including a first plurality of cores 210₀₋ₙ and a second plurality of cores 215₀₋ₘ. In one or more embodiments, first cores 210 may be implemented as performance cores, in that they may include greater amounts of circuitry (and wider and deeper pipelines) to perform more advanced computations in a performant manner. In contrast, second cores 215 may be configured as smaller cores that consume less power and may perform computations in a more efficient manner (e.g., with respect to power) than first cores 210. In certain implementations, first cores 210 may be referred to as P-cores (for performance cores) and second cores 215 may be referred to as E-cores (for efficiency cores). Note that different numbers of first and second cores may be present in different implementations. And as described herein, different numbers of assured and opportunistic cores may be specified for the first and second cores. To this end, core identification information 275 that indicates categorization of cores as assured or opportunistic may be stored in a non-volatile storage 270.

As further illustrated in FIG. 2, a cache memory 230 may be implemented as a shared cache arranged in a distributed manner. In one or more embodiments, cache memory 230 may be a LLC having a distributed implementation in which one or more banks are associated with each of the cores.

As further illustrated, a GPU 220 may include a media processor 222 and a plurality of EUs 224. Graphics processor 220 may be configured for efficiently performing graphics or other operations that can be broken apart for execution on parallel processing units such as EUs 224.

Still referring to FIG. 2, various interface circuitry 240 is present to enable interface to other components of a system. Although embodiments are not limited in this regard, such interface circuitry may include a Peripheral Component Interconnect Express (PCIe) interface, one or more Thunderbolt^{™} interfaces, an Intel^{®} Gaussian and Neural Accelerator (GNA) coprocessor and so forth. As further illustrated, processor 200 includes a display controller 250 and an image processing unit (IPU) 255.

As further shown, SoC 200 also includes a memory 260 that may provide memory controller functionality for interfacing with a system memory such as DRAM. Understand while shown at this high level in the embodiment of FIG. 2, many variations and alternatives are possible. Note that in this implementation, separate power controller circuitry such as power controller 135 and hardware control circuit 140 of FIG. 1 is not separately shown. Depending upon implementation such components may be separate circuits present within SoC 200 or this functionality may be performed by one or more of first and/or second cores or other processing unit.

With embodiments herein, SoC 200 may be configured to maintain, e.g., based on one or more environmental conditions such as power or thermal events, updated hardware feedback information regarding first cores 210 and second cores 215. In turn, control circuitry may, via an interface, inform the OS regarding this hardware feedback information, which may be used by the OS scheduler to schedule threads of given workloads to appropriate core types and core specifications.

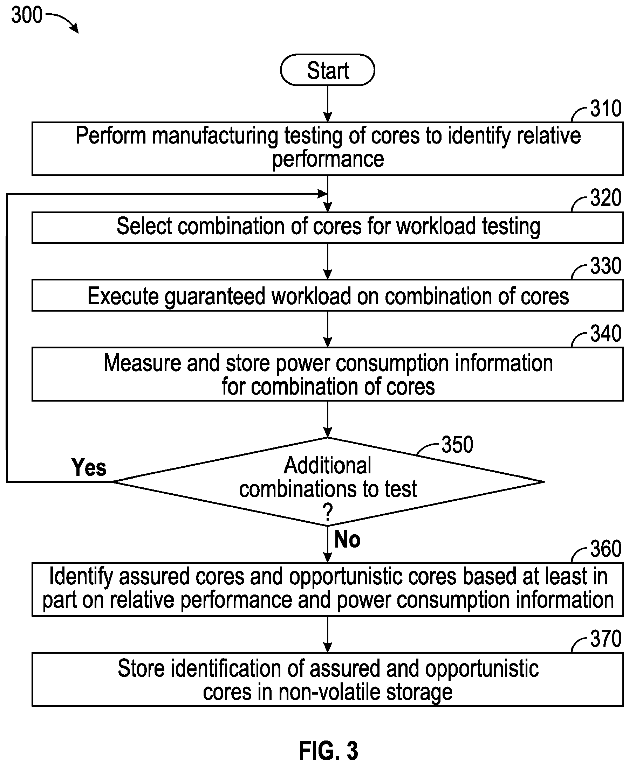

Referring now to FIG. 3, shown is a flow diagram of a method in accordance with an embodiment. More specifically, method 300 is a manufacturing time process to be performed during manufacturing testing and specification of a processor in accordance with an embodiment. Method 300 may be performed by hardware circuitry including manufacturing test systems and additional manufacturing components alone and/or in combination with firmware and/or software.

As illustrated, method 300 begins by performing manufacturing testing of cores of a processor (block 310). Of course, manufacturing testing of other processor components also may occur. This manufacturing testing of the cores may involve running various workloads at different frequencies and/or voltages to assess functionality of the cores. Given tight manufacturing tolerances, it is possible that one or more cores in a processor does not correctly operate during this functional testing, or do not work within target (e.g., a power target where the core operates at too high a power consumption for a given operating frequency, or does not work properly at a given performance/frequency level) and as such these cores may be identified as unavailable or not present (so-called dark silicon).

In addition, as a result of this testing, cores can be ranked for relative performance. This is the case since depending upon manufacturing variations, certain cores may operate with higher performance than other cores of the same core type. In different scenarios, multiple processor performance levels or bins can be identified for the cores, and the cores can be allocated to these different performance bins. Such identification may occur for the different core types present in a processor having heterogenous cores (e.g., performance and efficiency cores).

Still with reference to FIG. 3, next at block 320 a given combination of cores can be selected for workload testing. This workload testing may be of a TDP workload in which the cores are configured to operate within guaranteed frequency and voltage levels. Understand that this selection process at block 320 may be in accordance with a given selection algorithm that is performed iteratively to ensure that every possible combination of available cores is tested during the iterative testing described in FIG. 3.

Next at block 330, a guaranteed workload (namely a TDP workload) is executed on the selected combination of cores. In other cases another type of workload suitable to perform power consumption measurements may be used. During such testing, at block 340 power consumption information may be measured and stored for this combination of cores. For example, metrics regarding peak power consumed, total power consumed, average power consumption and so forth may be maintained and stored. At the conclusion of this testing, next it is determined whether there are additional combinations to test (diamond 350). If so, control passes back to block 320.

Still referring to FIG. 3, when it is determined that all available combinations have been tested, control passes to block 360. Here an identification process is performed to bin the available cores into different classes. Specifically, the cores can be separated into assured cores and opportunistic cores. This identification process may be based at least in part on the relative performance and power consumption information of the cores. For example, higher performant cores (based upon manufacturing testing of block 310) can be identified as the assured cores, while cores of lesser performance capability (e.g., with respect to frequency capabilities) can be identified as opportunistic cores. Next at block 370, this identification of assured and opportunistic cores may be stored in a non-volatile storage of the processor. For example, this information may be stored in a set of fuses that are written during manufacture.

Accordingly, at this point processor manufacturing may be completed with information stored in the processor to identify cores as being assured cores or opportunistic cores. This information may be used to bin the manufactured processor for a given SKU. As such, a core may be marketed and sold with this given specification of assured and opportunistic cores. In turn, a user of the processor can be guaranteed to utilize all of the assured cores in execution of a workload up to TDP levels. In many situations however, the user may execute workloads that do not have this high a level of power consumption. In such situations, the processor may dynamically enable execution of lower impact workloads on the assured cores and additionally on at least some of the opportunistic cores.

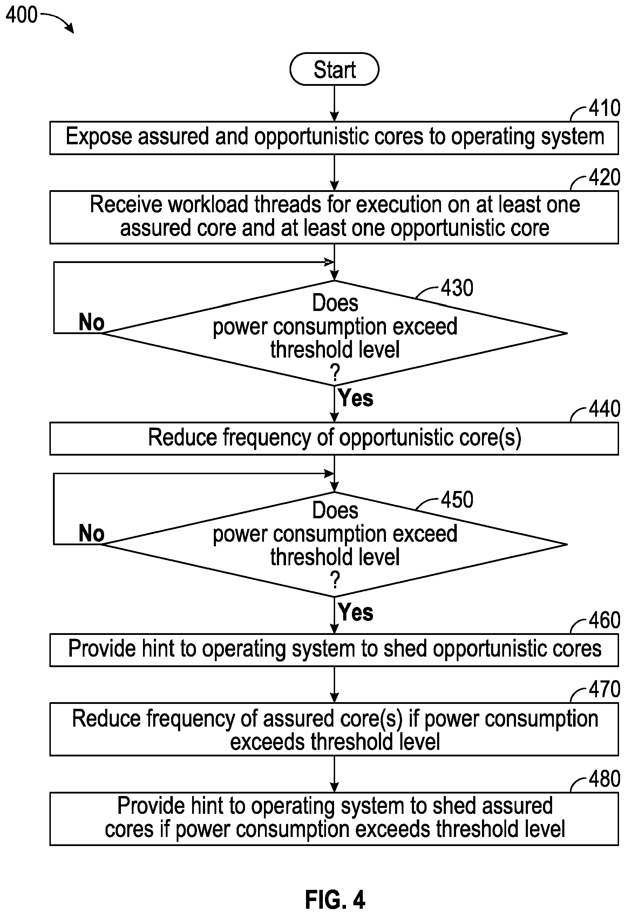

Referring now to FIG. 4, shown is a flow diagram of a method in accordance with another embodiment. More specifically, method 400 is a method for operating a processor having assured and opportunistic cores. As such, method 400 may be performed by hardware circuitry of the processor, such as a power controller alone and/or in combination with firmware and/or software.

As illustrated, method 400 begins by exposing the identification of the assured and opportunistic cores to an operating system (block 410). For example, the power controller may access a non-volatile storage of the processor including this identification information and provide it to the OS via a given interface. Although embodiments are not limited in this regard, in one or more embodiments, the interface may be a hardware structure that stores this identification information of assured and opportunistic cores. Such interface may also provide additional information to the OS. For example, the interface may further provide information regarding relative performance of the cores (which may be dynamically updated during processor operation) along with relative efficiency of the cores (which also can be dynamically updated). In a particular implementation, this interface may be an Intel ^{®} Thread Director interface. Such interface may be implemented at least in part in a data structure stored in a memory, including potentially in one or more cache memories of the processor.

Still referring to FIG. 4, next at block 420 workload threads may be received for execution on at least one assured core and at least one opportunistic core. In some cases, a scheduler of the OS may provide these threads for execution, along with an identification as to whether the thread is to execute on an assured core or an opportunistic core. Accordingly, in response to this information, the threads may be directed to the identified cores for execution. Note however that while the OS may place a given thread to a given core, processor hardware may make this core available or not. Processor hardware does not have a role in thread placement, other than providing availability hints to the OS. If the OS does not heed a hint, the performance of assured cores, or the hardware may duty cycle the opportunistic cores to a low frequency to minimize power at the expense of performance.

During such execution, the power controller monitors power consumption to ensure that the processor stays within specified thresholds. While there may be multiple thresholds at which different power management techniques may occur, for purposes of discussion herein, assume the presence of at least one threshold at which power management activities may occur in a prioritized manner. As an example, the power management activities are first applied to opportunistic core(s), and only if such power management activities do not result in power consumption reducing to be within threshold levels, further power management activities are applied to assured cores.

Thus as illustrated in FIG. 4 at diamond 430, it is determined whether power consumption exceeds a threshold level. Although embodiments are not limited in this regard, this threshold level may be a TDP level. If the power consumption exceeds this level, control passes to block 440 where the frequency of one or more opportunistic cores may be reduced. After this reduction and further monitoring of power consumption, it is determined at diamond 450 whether the power consumption still exceeds the threshold level. If not, no further power management activities may be incurred and continued execution on assured cores and one or more opportunistic cores may proceed.

Still referring to FIG. 4, otherwise if it is determined that the power consumption level still exceeds the threshold, control passes to block 460 where a hint is provided to the OS to shed the opportunistic core(s). This hint may be provided to the OS via the hardware interface. In one example implementation, a performance field of the interface for the opportunistic core(s) can be cleared to a null or zero value to indicate the hint. With certain OS's, it is possible to perform a hot ejection to remove a core from use, and perform an insertion when thermals again allow. In another case, the hint may be indicated by implementing duty cycling of cores, and the OS will identify this duty cycling and move workloads to assured cores. Understand that this hint may cause the OS scheduler to stop scheduling threads to the identified opportunistic cores and/or cause the scheduler to migrate currently executing threads from such cores.

However, understand that in some implementations, this hint is just that, namely a hint, and the OS scheduler may choose to ignore the hint. In this situation, and assuming power consumption continues to exceed a given threshold and/or thermal events are occurring (where measured temperature of the processor (or portions thereof) exceed threshold levels), additional power management activities may occur. For example, the opportunistic cores can be throttled such that minimal forward progress occurs (which may in turn cause the OS scheduler to migrate threads away from the opportunistic cores). This throttling may particularly be performed when the OS scheduler has scheduled affinitized threads to the opportunistic cores.

Still referring to FIG. 4, next at block 470, if it is determined that the power consumption still exceeds the threshold level, the frequency of one or more assured cores may also be reduced. If power consumption continues to exceed the threshold level after this reduction in frequency of the assured cores, control passes to block 480, where a hint may be provided to the OS to shed the assured core(s).

Although shown at this high level in the embodiment of FIG. 4, understand that many variations and alternatives are possible. For example, additional power management activities may be performed including dynamic voltage and frequency scaling, as well as hardware power management in which one or more cores are forcibly prevented from continued workload execution, to allow temperature of the processor to reduce.

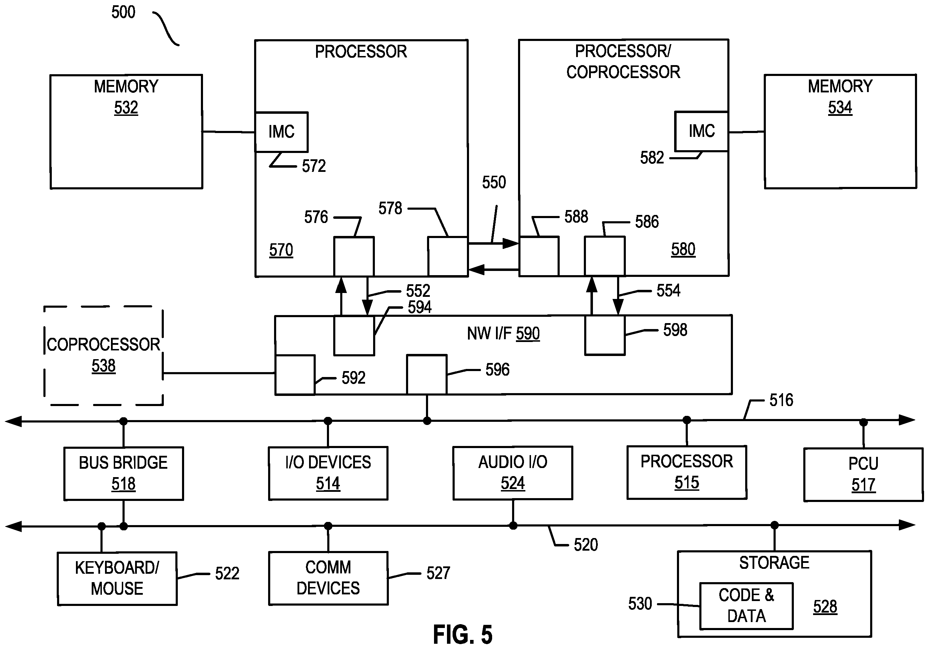

FIG. 5 illustrates an example computing system. Multiprocessor system 500 is an interfaced system and includes a plurality of processors or cores including a first processor 570 and a second processor 580 coupled via an interface 550 such as a point-to-point (P-P) interconnect, a fabric, and/or bus. In some examples, the first processor 570 and the second processor 580 are homogeneous. In some examples, first processor 570 and the second processor 580 are heterogenous. Though the example system 500 is shown to have two processors, the system may have three or more processors, or may be a single processor system. In some examples, the computing system is a SoC.

Processors 570 and 580 are shown including integrated memory controller (IMC) circuitry 572 and 582, respectively. Processor 570 also includes interface circuits 576 and 578; similarly, second processor 580 includes interface circuits 586 and 588. Processors 570, 580 may exchange information via the interface 550 using interface circuits 578, 588. IMCs 572 and 582 couple the processors 570, 580 to respective memories, namely a memory 532 and a memory 534, which may be portions of main memory locally attached to the respective processors. Processors 570, 580 include mixes of assured and opportunistic cores, as described herein.

Processors 570, 580 may each exchange information with a network interface (NW I/F) 590 via individual interfaces 552, 554 using interface circuits 576, 594, 586, 598. The network interface 590 (e.g., one or more of an interconnect, bus, and/or fabric, and in some examples is a chipset) may optionally exchange information with a coprocessor 538 via an interface circuit 592. In some examples, the coprocessor 538 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 570, 580 or outside of both processors, yet connected with the processors via an interface such as P-P interconnect, such that either or both processors' local cache information may be stored in the shared cache if a processor is placed into a low power mode.

Network interface 590 may be coupled to a first interface 516 via interface circuit 596. In some examples, first interface 516 may be an interface such as a Peripheral Component Interconnect (PCI) interconnect, a PCI Express interconnect or another I/O interconnect. In some examples, first interface 516 is coupled to a power control unit (PCU) 517, which may include circuitry, software, and/or firmware to perform power management operations with regard to the processors 570, 580 and/or co-processor 538. PCU 517 provides control information to a voltage regulator (not shown) to cause the voltage regulator to generate the appropriate regulated voltage. PCU 517 also provides control information to control the operating voltage generated. In various examples, PCU 517 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 517 is illustrated as being present as logic separate from the processor 570 and/or processor 580. In other cases, PCU 517 may execute on a given one or more of cores (not shown) of processor 570 or 580. In some cases, PCU 517 may be implemented as a microcontroller (dedicated or general-purpose) or other control logic configured to execute its own dedicated power management code, sometimes referred to as P-code. In yet other examples, power management operations to be performed by PCU 517 may be implemented externally to a processor, such as by way of a separate power management integrated circuit (PMIC) or another component external to the processor. In yet other examples, power management operations to be performed by PCU 517 may be implemented within BIOS or other system software.

Various I/O devices 514 may be coupled to first interface 516, along with a bus bridge 518 which couples first interface 516 to a second interface 520. In some examples, one or more additional processor(s) 515, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 516. In some examples, second interface 520 may be a low pin count (LPC) interface. Various devices may be coupled to second interface 520 including, for example, a keyboard and/or mouse 522, communication devices 527 and storage circuitry 528. Storage circuitry 528 may be one or more non-transitory machine-readable storage media as described below, such as a disk drive or other mass storage device which may include instructions/code and data 530. Further, an audio I/O 524 may be coupled to second interface 520. Note that other architectures than the point-to-point architecture described above are possible. For example, instead of the point-to-point architecture, a system such as multiprocessor system 500 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

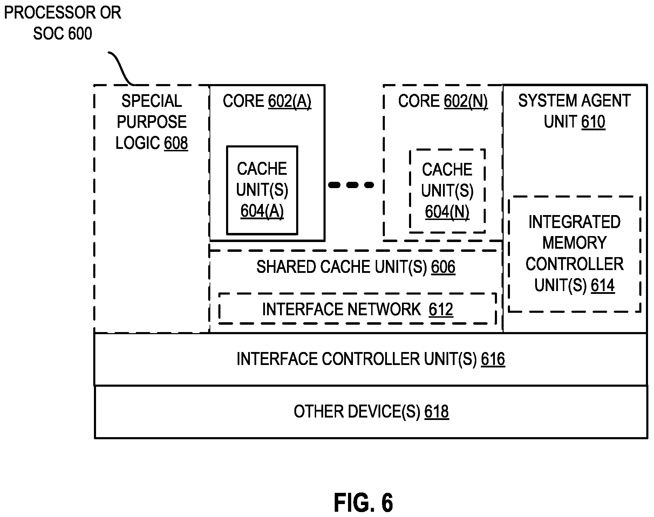

FIG. 6 illustrates a block diagram of an example processor and/or SoC 600 that may have one or more cores and an integrated memory controller. The solid lined boxes illustrate a processor 600 with a single core 602(A), system agent unit circuitry 610, and a set of one or more interface controller unit(s) circuitry 616, while the optional addition of the dashed lined boxes illustrates an alternative processor 600 with multiple cores 602(A)-(N), a set of one or more integrated memory controller unit(s) circuitry 614 in the system agent unit circuitry 610, and special purpose logic 608, as well as a set of one or more interface controller units circuitry 616. Note that the processor 600 may be one of the processors 570 or 580, or co-processor 538 or 515 of FIG. 5.

Thus, different implementations of the processor 600 may include: 1) a CPU with the special purpose logic 608 being integrated graphics and/or scientific (throughput) logic (which may include one or more cores, not shown), and the cores 602(A)-(N) being one or more general purpose cores (e.g., general purpose in-order cores, general purpose out-of-order cores, or a combination of the two, where these cores may include a mix of assured and opportunistic cores in accordance with an embodiment); 2) a coprocessor with the cores 602(A)-(N) being a large number of special purpose cores intended primarily for graphics and/or scientific (throughput); and 3) a coprocessor with the cores 602(A)-(N) being a large number of general purpose in-order cores. Thus, the processor 600 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 600 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 604(A)-(N) within the cores 602(A)-(N), a set of one or more shared cache unit(s) circuitry 606, and external memory (not shown) coupled to the set of integrated memory controller unit(s) circuitry 614. The set of one or more shared cache unit(s) circuitry 606 may include one or more mid-level caches, such as level 2 (L2), level 3 (L3), level 4 (L4), or other levels of cache, such as a last level cache (LLC), and/or combinations thereof. While in some examples interface network circuitry 612 (e.g., a ring interconnect) interfaces the special purpose logic 608 (e.g., integrated graphics logic), the set of shared cache unit(s) circuitry 606, and the system agent unit circuitry 610, alternative examples use any number of well-known techniques for interfacing such units. In some examples, coherency is maintained between one or more of the shared cache unit(s) circuitry 606 and cores 602(A)-(N). In some examples, interface controller units circuitry 616 couple the cores 602 to one or more other devices 618 such as one or more I/O devices, storage, one or more communication devices (e.g., wireless networking, wired networking, etc.), etc.

In some examples, one or more of the cores 602(A)-(N) are capable of multi-threading. The system agent unit circuitry 610 includes those components coordinating and operating cores 602(A)-(N). The system agent unit circuitry 610 may include, for example, power control unit (PCU) circuitry and/or display unit circuitry (not shown). The PCU may be or may include logic and components needed for regulating the power state of the cores 602(A)-(N) and/or the special purpose logic 608 (e.g., integrated graphics logic). The display unit circuitry is for driving one or more externally connected displays.

The cores 602(A)-(N) may be homogenous in terms of instruction set architecture (ISA). Alternatively, the cores 602(A)-(N) may be heterogeneous in terms of ISA; that is, a subset of the cores 602(A)-(N) may be capable of executing an ISA, while other cores may be capable of executing only a subset of that ISA or another ISA, and these cores may include a mix of assured and opportunistic cores as described herein.

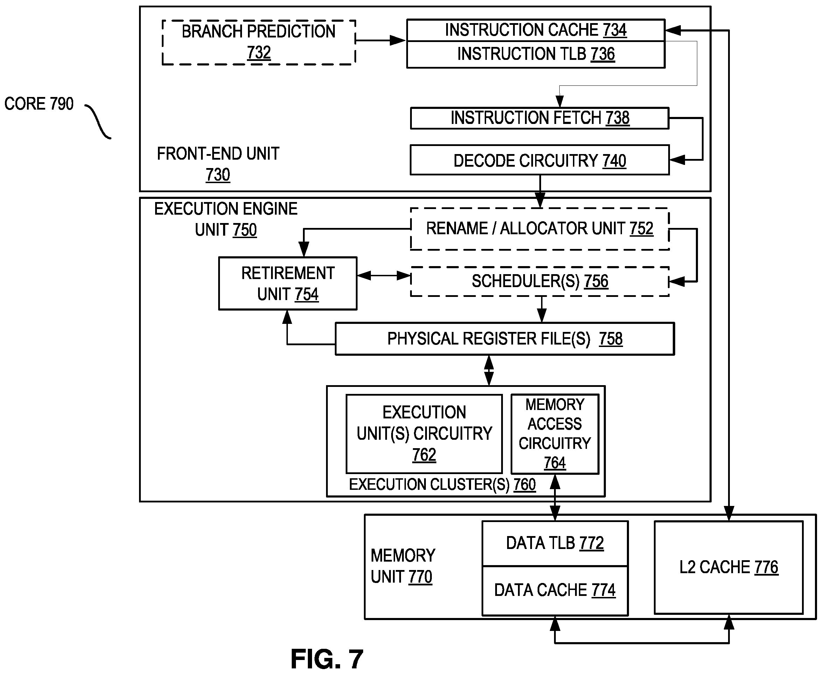

FIG. 7 shows a processor core 790 including front-end unit circuitry 730 coupled to execution engine unit circuitry 750, and both are coupled to memory unit circuitry 770. The core 790 may be a reduced instruction set architecture computing (RISC) core, a complex instruction set architecture computing (CISC) core, a very long instruction word (VLIW) core, or a hybrid or alternative core type. Depending on implementation, processor core 790 may be representative of a given assured or opportunistic core in accordance with an embodiment. As yet another option, the core 790 may be a special-purpose core, such as, for example, a network or communication core, compression engine, coprocessor core, general purpose computing graphics processing unit (GPGPU) core, graphics core, or the like.

The front-end unit circuitry 730 may include branch prediction circuitry 732 coupled to instruction cache circuitry 734, which is coupled to an instruction translation lookaside buffer (TLB) 736, which is coupled to instruction fetch circuitry 738, which is coupled to decode circuitry 740. In one example, the instruction cache circuitry 734 is included in the memory unit circuitry 770 rather than the front-end circuitry 730. The decode circuitry 740 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 740 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 740 may be implemented using various different mechanisms. Examples of suitable mechanisms include, but are not limited to, look-up tables, hardware implementations, programmable logic arrays (PLAs), microcode read only memories (ROMs), etc. In one example, the core 790 includes a microcode ROM (not shown) or other medium that stores microcode for certain macroinstructions (e.g., in decode circuitry 740 or otherwise within the front-end circuitry 730). In one example, the decode circuitry 740 includes a micro-operation (micro-op) or operation cache (not shown) to hold/cache decoded operations, micro-tags, or micro-operations generated during the decode or other stages of the processor pipeline 700. The decode circuitry 740 may be coupled to rename/allocator unit circuitry 752 in the execution engine circuitry 750.

The execution engine circuitry 750 includes the rename/allocator unit circuitry 752 coupled to retirement unit circuitry 754 and a set of one or more scheduler(s) circuitry 756. The scheduler(s) circuitry 756 represents any number of different schedulers, including reservations stations, central instruction window, etc. In some examples, the scheduler(s) circuitry 756 can include arithmetic logic unit (ALU) scheduler/scheduling circuitry, ALU queues, address generation unit (AGU) scheduler/scheduling circuitry, AGU queues, etc. The scheduler(s) circuitry 756 is coupled to the physical register file(s) circuitry 758. Each of the physical register file(s) circuitry 758 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 758 includes vector registers unit circuitry, writemask registers unit circuitry, and scalar register unit circuitry. These register units may provide architectural vector registers, vector mask registers, general-purpose registers, etc. The physical register file(s) circuitry 758 is coupled to the retirement unit circuitry 754 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 754 and the physical register file(s) circuitry 758 are coupled to the execution cluster(s) 760. The execution cluster(s) 760 includes a set of one or more execution unit(s) circuitry 762 and a set of one or more memory access circuitry 764. The execution unit(s) circuitry 762 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 756, physical register file(s) circuitry 758, and execution cluster(s) 760 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 764). It should also be understood that where separate pipelines are used, one or more of these pipelines may be out-of-order issue/execution and the rest in-order.

In some examples, the execution engine unit circuitry 750 may perform load store unit (LSU) address/data pipelining to an Advanced Microcontroller Bus (AMB) interface (not shown), and address phase and writeback, data phase load, store, and branches.

The set of memory access circuitry 764 is coupled to the memory unit circuitry 770, which includes data TLB circuitry 772 coupled to data cache circuitry 774 coupled to level 2 (L2) cache circuitry 776. In one example, the memory access circuitry 764 may include load unit circuitry, store address unit circuitry, and store data unit circuitry, each of which is coupled to the data TLB circuitry 772 in the memory unit circuitry 770. The instruction cache circuitry 734 is further coupled to the level 2 (L2) cache circuitry 776 in the memory unit circuitry 770. In one example, the instruction cache 734 and the data cache 774 are combined into a single instruction and data cache (not shown) in L2 cache circuitry 776, level 3 (L3) cache circuitry (not shown), and/or main memory. The L2 cache circuitry 776 is coupled to one or more other levels of cache and eventually to a main memory.

The following examples pertain to further embodiments.

In one example, a processor includes: a plurality of cores to execute instructions; and a non-volatile storage coupled to the plurality of cores. The non-volatile storage is to store identification information regarding the plurality of cores, the identification information to identify, for each of the plurality of cores, the core as an assured core or an opportunistic core. The processor is specified with a first subset of the plurality of cores comprising assured cores and a second subset of the plurality of cores comprising opportunistic cores, and the processor is to execute, within a specified power budget and a specified thermal budget, a specified workload on the first subset of the plurality of cores at a first performance level.

In an example, the processor further comprises: at least one monitor circuit coupled to the plurality of cores to measure power information and temperature information; and a hardware feedback circuit coupled to the at least one monitor circuit, the hardware feedback circuit to determine hardware feedback information comprising an energy efficiency capability and a performance capability of at least some of the plurality of cores based at least in part on the power information and the temperature information.

In an example, the hardware feedback circuit is to allocate at least one hardware feedback data structure to store the hardware feedback information and the identification information, the hardware feedback data structure accessible to an operating system.

In an example, the identification information comprises hint information for the operating system, the operating system to schedule one or more threads to one or more of the second subset of the plurality of cores based at least in part on the hint information.

In an example, in response to scheduling by the operating system, the processor is to execute a multi-threaded workload on one or more of the first subset of the plurality of cores and one or more of the second subset of the plurality of cores, the multi-threaded workload having a lower complexity than the specified workload.

In an example, the processor further comprises a power controller that, after the reduction of the frequency of the at least one of the second subset of the plurality of cores, is to reduce a frequency of at least one of the second subset of the plurality of cores.

In an example, the power controller, when the power consumption of the processor exceeds the first threshold, is to communicate shed information to an operating system to indicate that the operating system is not to schedule threads to the second subset of the plurality of cores.

In an example, the power controller, when the power consumption of the processor exceeds the first threshold, is to duty cycle at least one of the second subset of the plurality of cores.

In an example, the processor further comprises one or more unavailable cores, the processor to identify the first subset of the plurality of cores and the second subset of the plurality of cores to an operating system and to not identify the one or more unavailable cores to the operating system.

In another example, a method comprises: identifying to an operating system, via a processor, a first subset of cores comprising assured cores and a second subset of cores comprising opportunistic cores, the processor comprising the first subset of cores and the second subset of cores; receiving, from the operating system, at least one first thread for execution on one or more of the first subset of cores and at least one second thread for execution on one or more of the second subset of cores; and executing the at least one first thread on the one or more of the first subset of cores and executing at least one second thread on the one or more of the second subset of cores.

In an example, the method further comprises: if a processor constraint occurs, reducing a frequency of the one or more of the second subset of cores; and after reducing the frequency of the one or more of the second subset of cores, informing the operating system that the processor constraint has occurred if a power consumption level of the processor exceeds a threshold.

In an example, the method further comprises informing the operating system that the processor constraint occurred when at least one of a power excursion or a temperature excursion has occurred.

In an example, informing the operating system comprises providing hint information to indicate that the opportunistic cores are unavailable.

In an example, providing the hint information comprises updating performance information of the opportunistic cores to a null value.

In an example, providing the hint information comprises providing a shed hint to the operating system to indicate that the opportunistic cores are unavailable.

In an example, the method further comprises receiving, from the operating system, the at least one first thread and the least one second thread of a multi-threaded workload, the multi-threaded workload having a lower complexity than a guaranteed workload that the processor is specified to execute, within a guaranteed power budget and a guaranteed thermal budget, on the first subset of the plurality of cores.

In an example, the method further comprises: allocating a hardware feedback structure; populating the hardware feedback structure with performance and efficiency information regarding the first subset of cores and the second subset of cores; populating the hardware feedback structure with identification information to identify the first subset of cores as the assured cores and the second subset of cores as the opportunistic cores; and exposing to the operating system the first subset of cores as the assured cores and the second subset of cores as the opportunistic cores via the hardware feedback structure.

In another example, a computer readable medium including instructions is to perform the method of any of the above examples.

In a further example, a computer readable medium including data is to be used by at least one machine to fabricate at least one integrated circuit to perform the method of any one of the above examples.

In a still further example, an apparatus comprises means for performing the method of any one of the above examples.

In another example, a system comprises a processor and a system memory coupled to the processor, the system memory to store a hardware feedback structure. The processor comprises: a first plurality of cores to execute instructions, the first plurality of cores comprising assured cores specified to execute a guaranteed workload within constraints of the processor; a second plurality of cores to execute instructions, the second plurality of cores comprising opportunistic cores specified to execute a workload having a complexity less than the guaranteed workload; a power controller to control delivery of an operating voltage and an operating frequency to the first plurality of cores and the second plurality of cores; and a control circuit coupled to the first plurality of cores and the second plurality of cores, the control circuit to provide hardware feedback information regarding the first plurality of cores and the second plurality of cores, the control circuit to allocate the hardware feedback structure to store the hardware feedback information and core identification information to identify the assured cores and the opportunistic cores, the hardware feedback structure accessible by an operating system.

In an example, the first plurality of cores comprise heterogeneous core types.

In an example, the processor is to: receive, from the operating system, at least one first thread for execution on one or more of the assured cores and at least one second thread for execution on one or more of the opportunistic cores; execute the at least one first thread on the one or more of the assured cores and execute the at least one second thread on the one or more of the opportunistic cores; and in response to a processor constraint, reduce a frequency of the one or more of the opportunistic cores and maintain a frequency of the one or more assured cores.

In yet another example, an apparatus comprises: means for identifying to an operating system a first subset of core means comprising assured core means and a second subset of core means comprising opportunistic core means, where processing means comprises the first subset of core means and the second subset of core means and is specified with the assured core means and the opportunistic core means; means for receiving, from the operating system, at least one first thread for execution on one or more of the first subset of core means and at least one second thread for execution on one or more of the second subset of core means; and means for executing the at least one first thread on the one or more of the first subset of core means and means for executing at least one second thread on the one or more of the second subset of core means.

In an example, the apparatus further comprises means for reducing a frequency of the one or more of the second subset of core means; and after reducing the frequency of the one or more of the second subset of core means, means for informing the operating system that a processor constraint has occurred if a power consumption level of the processing means exceeds a threshold.

In an example, the apparatus further comprises means for informing the operating system that the processor constraint occurred when at least one of a power excursion or a temperature excursion has occurred.

Understand that various combinations of the above examples are possible.

Note that the terms "circuit" and "circuitry" are used interchangeably herein. As used herein, these terms and the term "logic" are used to refer to alone or in any combination, analog circuitry, digital circuitry, hard wired circuitry, programmable circuitry, processor circuitry, microcontroller circuitry, hardware logic circuitry, state machine circuitry and/or any other type of physical hardware component. Embodiments may be used in many different types of systems. For example, in one embodiment a communication device can be arranged to perform the various methods and techniques described herein. Of course, the scope of the present invention is not limited to a communication device, and instead other embodiments can be directed to other types of apparatus for processing instructions, or one or more machine readable media including instructions that in response to being executed on a computing device, cause the device to carry out one or more of the methods and techniques described herein.

Embodiments may be implemented in code and may be stored on a non-transitory storage medium having stored thereon instructions which can be used to program a system to perform the instructions. Embodiments also may be implemented in data and may be stored on a non-transitory storage medium, which if used by at least one machine, causes the at least one machine to fabricate at least one integrated circuit to perform one or more operations. Still further embodiments may be implemented in a computer readable storage medium including information that, when manufactured into a SOC or other processor, is to configure the SOC or other processor to perform one or more operations. The storage medium may include, but is not limited to, any type of disk including floppy disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

While the present disclosure has been described with respect to a limited number of implementations, those skilled in the art, having the benefit of this disclosure, will appreciate numerous modifications and variations therefrom. It is intended that the appended claims cover all such modifications and variations.

## Claims

1. A processor comprising:
a plurality of cores to execute instructions; and
a non-volatile storage coupled to the plurality of cores to store identification information regarding the plurality of cores, the identification information to identify, for each of the plurality of cores, the core as an assured core or an opportunistic core, wherein:
the processor is specified with a first subset of the plurality of cores comprising assured cores and a second subset of the plurality of cores comprising opportunistic cores; and
the processor is to execute, within a specified power budget and a specified thermal budget, a specified workload on the first subset of the plurality of cores at a first performance level.

2. The processor of claim 1, further comprising:
at least one monitor circuit coupled to the plurality of cores to measure power information and temperature information; and
a hardware feedback circuit coupled to the at least one monitor circuit, the hardware feedback circuit to determine hardware feedback information comprising an energy efficiency capability and a performance capability of at least some of the plurality of cores based at least in part on the power information and the temperature information.

3. The processor of claim 2, wherein the hardware feedback circuit is to allocate at least one hardware feedback data structure to store the hardware feedback information and the identification information, the hardware feedback data structure accessible to an operating system.

4. The processor of claim 3, wherein the identification information comprises hint information for the operating system, wherein the operating system is to schedule one or more threads to one or more of the second subset of the plurality of cores based at least in part on the hint information.

5. The processor of claim 3, wherein, in response to scheduling by the operating system, the processor is to execute a multi-threaded workload on one or more of the first subset of the plurality of cores and one or more of the second subset of the plurality of cores, the multi-threaded workload having a lower complexity than the specified workload.

6. The processor of claim 1, further comprising a power controller, after the reduction of the frequency of the at least one of the second subset of the plurality of cores, to reduce a frequency of at least one of the second subset of the plurality of cores.

7. The processor of claim 6, wherein the power controller, when the power consumption of the processor exceeds the first threshold, is to communicate shed information to an operating system to indicate that the operating system is not to schedule threads to the second subset of the plurality of cores.

8. The processor of claim 6, wherein the power controller, when the power consumption of the processor exceeds the first threshold, is to duty cycle at least one of the second subset of the plurality of cores.

9. The processor of any one of claims 2-8, wherein the processor further comprises one or more unavailable cores, the processor to identify the first subset of the plurality of cores and the second subset of the plurality of cores to an operating system and to not identify the one or more unavailable cores to the operating system.

10. A method comprising:
identifying to an operating system, via a processor, a first subset of cores comprising assured cores and a second subset of cores comprising opportunistic cores, wherein the processor comprises the first subset of cores and the second subset of cores;
receiving, from the operating system, at least one first thread for execution on one or more of the first subset of cores and at least one second thread for execution on one or more of the second subset of cores; and
executing the at least one first thread on the one or more of the first subset of cores and executing at least one second thread on the one or more of the second subset of cores.

11. The method of claim 10, wherein the method further comprises:
if a processor constraint occurs, reducing a frequency of the one or more of the second subset of cores; and
after reducing the frequency of the one or more of the second subset of cores, informing the operating system that the processor constraint has occurred if a power consumption level of the processor exceeds a threshold.

12. The method of claim 11, wherein the method further comprises informing the operating system that the processor constraint occurred when at least one of a power excursion or a temperature excursion has occurred.

13. The method of claim 11, wherein informing the operating system comprises providing hint information to indicate that the opportunistic cores are unavailable.

14. A computer-readable storage medium including computer-readable instructions, when executed, to implement a method as claimed in any one of claims 10 to 13.

15. An apparatus comprising means to perform a method as claimed in any one of claims 10 to 13.
